# EUROPÄISCHE PATENTSCHRIFT

(11) **EP 3 000 165 B1**
(45) Veröffentlichungstag und Bekanntmachung des Hinweises auf die Patenterteilung: **20.11.2019**
(21) Anmeldenummer: 13739167.8
(22) Anmeldetag: 08.07.2013
(51) Int. Cl.: H02M 1/36, H02M 7/483, G05F 1/70, H02J 3/18, H02M 7/49, H02M 1/42

(54) **MEHRSTUFIGER STROMRICHTER ZUR BLINDLEISTUNGSKOMPENSATION UND ZUGEHÖRIGES BETRIEBSVERFAHREN**
MULTISTAGE CONVERTER FOR POWER FACTOR CORRECTION AND ASSOCIATED OPERATING METHOD
CONVERTISSEUR DE COURANT À PLUSIEURS NIVEAUX POUR LA COMPENSATION DE L'ÉNERGIE RÉACTIVE ET PROCÉDÉ PERMETTANT DE FAIRE FONCTIONNER LEDIT CONVERTISSEUR

(43) Veröffentlichungstag der Anmeldung: 30.03.2016
(73) Patentinhaber: Siemens Aktiengesellschaft, 80333 München (DE)
(72) Erfinder: MÜLLER, Sebastian, 91052 Erlangen (DE); PIESCHEL, Martin, 90473 Nürnberg (DE); WEIGEL, Thilo, 90427 Nürnberg (DE)
(86) Internationale Anmeldenummer: PCT/EP2013/064390
(87) Internationale Veröffentlichungsnummer: WO 2015/003737

(56) Entgegenhaltungen:
- WO-A1-2010/051854
- WO-A1-2012/167833
- HANSON D J ET AL: "STATCOM: a new era of reactive compensation", POWER ENGINEERING JOURNAL, INSTITUTION OF ELECTRICAL ENGINEERS, HITCHIN, GB, Bd. 16, 1. Juni 2002 (2002-06-01), Seiten 151-160, XP002514401, ISSN: 0950-3366, DOI: 10.1049/PE:20020308

## Beschreibung

Die Erfindung betrifft ein Verfahren für den Betrieb eines mehrstufigen Stromrichters zur Blindleistungskompensation einer mehrphasigen Netzspannung, wobei jeder Phase ein Phasenmodul mit mehreren in Reihe geschalteten, jeweils einen elektrischen Energiespeicher aufweisenden Submodulen zugeordnet ist, wobei jedes Submodul mittels eines elektronischen Schalters mit der Phase der Netzspannung verbunden oder davon getrennt werden kann, sowie mit einem Leistungsschalter zum Trennen des Stromrichters von der Netzspannung.

Stromrichter dieser Art dienen zur Kompensation von Blindleistung in einem Stromnetz. Auf diese Weise wird die Spannungsqualität und Stabilität im Stromversorgungsnetz verbessert, so dass schwankende Energiequellen wie Offshore-Windparks oder Photovoltaikanlagen an ein Stromnetz angeschlossen werden können.

Ein gattungsgemäßer Stromrichter ist aus der WO2010/051854 A1 bekannt.

Stromrichter dieser Art werden von der Anmelderin unter der Bezeichnung SVC PLUS angeboten. Es handelt sich dabei um modulare Multilevel-Stromrichter, die in der Lage sind, eine nahezu sinusförmige Spannung zu erzeugen. Der Stromrichter besteht aus mehreren Phasenmodulen, wobei für jede Phase ein Phasenmodul vorgesehen ist. Jedes Phasenmodul umfasst eine Vielzahl von in Reihe geschalteten Energiespeichern, die als Spannungsquelle dienen. Die vielen in Reihe geschalteten Spannungsquellen wirken wie ein Spannungsteiler, durch den die angestrebte Netzspannung mit sinusförmigem Verlauf erzeugt wird. Jede dieser Spannungsquellen kann einen als Kondensator ausgebildeten Energiespeicher und einen als IGBT (insulated gate bipolar transistor) ausgebildeten Schalter aufweisen. Eine Steuerungselektronik schaltet die Leistungstransistoren so, dass der Kondensator nach Bedarf überbrückt oder aktiviert werden kann, so dass praktisch jede gewünschte Spannung eingestellt werden kann.

Zusätzlich weist der mehrstufige Stromrichter einen Leistungsschalter auf, mit dem eine Trennung des Stromrichters von der Netzspannung erfolgen kann, z. B. wenn ein Fehler in einem an dem Stromrichter angeschlossenen Gerät auftritt. Sobald der Stromrichter von der dreiphasigen Netzspannung getrennt ist, entladen sich die elektrischen Energiespeicher, vorzugsweise Kondensatoren, in den Submodulen der Phasenmodule ungleichmäßig. Diese ungleichmäßige Spannungsaufteilung ist auch beim Wiedereinschalten vorhanden, wodurch der Übergang in einen kontrollierten Betrieb verhindert wird. In der Praxis muss daher mehrere Minuten gewartet werden, bis die elektrischen Energiespeicher in den Submodulen nahezu vollständig entladen sind. In diesem Betriebszustand, nach einer Abschaltung durch den Leistungsschalter, kann der Stromrichter nicht seine Funktion zur Stabilisierung der Netzspannung wahrnehmen. In diesen Fällen muss daher auf andere Geräte zurückgegriffen werden, deren Einsatz jedoch Nachteile wie die Erzeugung starker Netzverzerrungen sowie eine geringe Dynamik aufweisen.

Der Erfindung liegt daher die Aufgabe zugrunde, ein Verfahren für den Betrieb eines mehrstufigen Stromrichters zur Blindleistungskompensation anzugeben, das nach einem Trennen des Stromrichters von der Netzspannung ein schnelles Wiedereinschalten ermöglicht.

Zur Lösung dieser Aufgabe ist bei einem Verfahren der eingangs genannten Art erfindungsgemäß vorgesehen, dass der Stromrichter eine Regelung aufweist, durch die die Spannung der Phasenmodule bei geöffnetem Leistungsschalter balanciert wird.

Die Erfindung beruht auf der Erkenntnis, dass der Stromrichter nach einer Trennung vom Netz schnell wieder eingeschaltet werden kann, wenn die in den Submodulen gespeicherte Energie gleichmäßig oder symmetrisch verteilt ist. Zum Zeitpunkt der Trennung vom Netz existiert im Allgemeinen aufgrund des zuvor harmonisch überlagerten Verlaufs der Energien ein unsymmetrischer Zustand, der durch die unterschiedliche Verlustleistung der Submodule ursächlich für einen unsymmetrischen Verlauf des Abklingvorgangs ist.

Bei dem erfindungsgemäßen Verfahren wird eine Balancierung der gespeicherten Energie vorgenommen, wodurch die vorhandene Energie symmetrisch verteilt wird. Dazu dient erfindungsgemäß eine Regelung, die die einzelnen Submodule aktiv ansteuert.

Bei dem erfindungsgemäßen Verfahren wird es bevorzugt, dass die Phasenmodule in einer Dreieckschaltung geschaltet sind und bei geöffnetem Leistungsschalter zum Energieausgleich gezielt durch die Regelung mit Spannungen beaufschlagt werden. Wegen der Dreieckschaltung fließt durch die Phasenmodule ein identischer Kreisstrom, dem gezielt gewählte Phasenmodulspannungen überlagert werden. Auf diese Weise wird der gewünschte Energieausgleich zwischen den Phasenmodulen und den elektrischen Energiespeichern der Submodule bewirkt. In der Folge wird eine ungleichmäßige Verteilung der vorhandenen Energie vermieden, so dass sich der Stromrichter permanent in einem gleichmäßig oder symmetrisch geladenen Zustand befindet, wodurch ein erneutes Einschalten des vom Netz getrennten Stromrichters jederzeit möglich ist.

Bei dem erfindungsgemäßen Verfahren umfasst die Balancierung der Spannungen der Phasenmodule die folgenden Schritte
- Berechnen der in den Energiespeichern der Phasenmodule gespeicherten Energie,
- Berechnen eines Regelfehlers der einzelnen Energiespeicher,
- Zuführen der Regelfehler zu einem Regler,
- Erzeugen einer sinusförmigen Wechselspannung in einem Funktionsgenerator,
- Zuordnen der Ausgangssignale des Reglers zu der Wechselspannung, und
- Ansteuern der Submodule zum Einstellen der Spannungen.

Bei diesem Verfahren wird die in den Energiespeichern der Phasenmodule gespeicherte Energie vorzugsweise als skalierte Summe der einzelnen quadrierten Energiespeicherspannungen ermittelt, ein Energiespeicher ist vorzugsweise als Kondensator oder Batterie ausgebildet. Der Verfahrensschritt der Berechnung eines Regelfehlers der einzelnen Energiespeicher erfolgt zu einem Sollwert 0, durch die Regelung wird somit die Abweichung der Energien der einzelnen Energiespeicher minimiert. Nach der Erzeugung der sinusförmigen Wechselspannung in dem Funktionsgenerator wird diese mit den Ausgangssignalen des Reglers überlagert, so dass Spannungen für die einzelnen Phasen erhalten werden. Vorzugweise wird das erfindungsgemäße Verfahren in einem Stromnetz mit drei Phasen eingesetzt.

In weiterer Ausgestaltung des Verfahrens kann es vorgesehen sein, dass die in den Energiespeichern gespeicherte Energie einer alpha-beta-Transformation unterzogen wird und dass nach dem Zuordnen der Ausgangssignale zu der sinusförmigen Wechselgröße eine Rücktransformation erfolgt, wodurch jeder Phase eine Spannung zugeordnet wird. Durch diese Transformation kann eine dreiphasige Größe, in diesem Fall die Spannungen der drei Phasen, in ein zweiachsiges Koordinatensystem überführt werden.

Daneben betrifft die Erfindung einen mehrstufigen Stromrichter zur Blindleistungskompensation einer mehrphasigen Netzspannung, wobei jeder Phase ein Phasenmodul mit mehreren in Reihe geschalteten, jeweils einen elektrischen Energiespeicher aufweisenden Submodulen zugeordnet ist, wobei jedes Submodul mittels eines elektronischen Schalters mit der Phase der Netzspannung verbunden oder davon getrennt werden kann, sowie mit einem Leistungsschalter zum Trennen des Stromrichters von der Netzspannung.

Der erfindungsgemäße Stromrichter zeichnet sich dadurch aus, dass er eine Regelung aufweist, die zum Balancieren der Spannungen der Phasenmodule bei geöffnetem Leistungsschalter ausgebildet ist.

Bei dem erfindungsgemäßen Stromrichter ist der elektrische Energiespeicher eines Submoduls vorzugsweise als Kondensator oder Batterie ausgebildet.

Weitere Ausgestaltungen der Erfindung werden in den Unteransprüchen beschrieben.

Die Erfindung wird nachfolgend anhand eines Ausführungsbeispiels unter Bezugnahme auf die Zeichnungen erläutert. Die Zeichnungen sind schematische Darstellungen und zeigen:
Fig. 1 ein Schaltbild eines erfindungsgemäßen Stromrichters, der zur Durchführung des erfindungsgemäßen Verfahrens geeignet ist.
Fig. 2 ein Schaltbild eines Submoduls des erfindungsgemäßen Stromrichters; und
Fig. 3 den Ablauf der Regelung bei dem erfindungsgemäßen Verfahren.

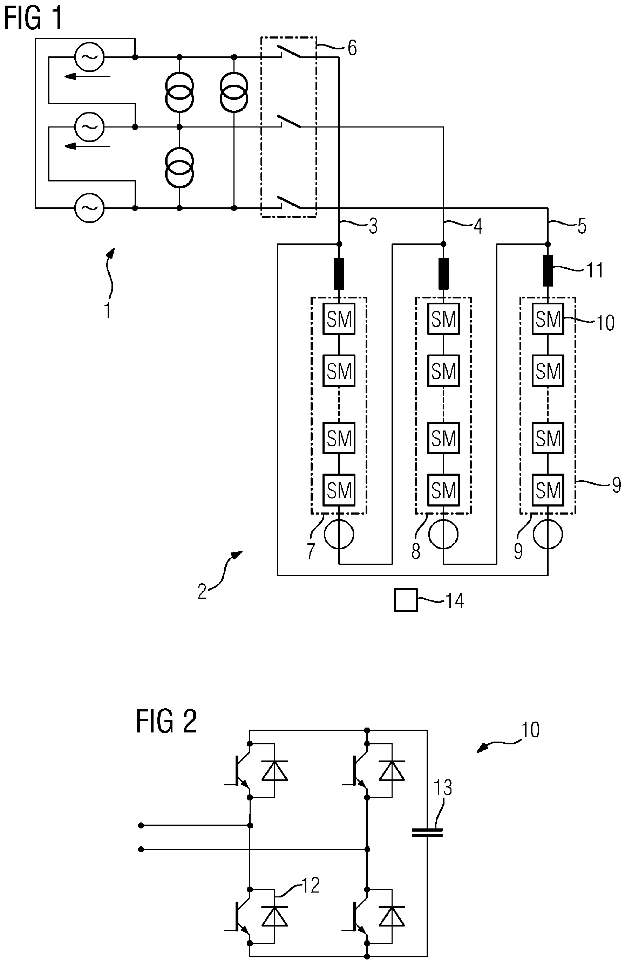

Fig. 1 zeigt ein dreiphasiges Stromnetz 1, an das ein mehrstufiger Stromrichter 2 angeschlossen ist. In dem dargestellten Ausführungsbeispiel weist das Stromnetz 1 drei Phasen 3, 4, 5 auf. Zwischen dem Stromrichter 2 und dem Stromnetz 1 ist ein Leistungsschalter 6 geschaltet, so dass der Stromrichter 2 beim Auftreten eines Fehlers, z. B. bei einer Fehlfunktion eines an den Stromrichter 2 angeschlossenen Geräts, vom Stromnetz 1 getrennt werden kann.

Der Stromrichter 2 umfasst Phasenmodule 7, 8, 9, von denen jedes einer der Phasen 3, 4, 5 zugeordnet ist. Jedes Phasenmodul 7, 8, 9 umfasst mehrere in Reihe geschaltete Submodule 10, zusätzlich ist jedem Phasenmodul 7, 8, 9 eine Induktivität 11 zugeordnet.

Fig. 2 zeigt das Submodul 10, das in dem dargestellten Ausführungsbeispiel vier Leistungshalbleiter 12 (IGBT) sowie einen Kondensator 13 als elektrischen Energiespeicher aufweist. Das Submodul 10 ist als H-Brücke, die auch als Vollbrücke bezeichnet wird, geschaltet. Durch eine entsprechende Ansteuerung der einzelnen Leistungshalbleiter 12 kann dem Kondensator 13 entweder Energie entnommen oder Energie an ihn übertragen werden, so dass die Spannung des Submoduls 10 exakt eingestellt werden kann.

Da der Stromrichter 2, wie in Fig. 1 gezeigt ist, mehrere oder viele derartige in Reihe geschaltete Submodule 10 aufweist, kann eine bestimmte Spannung schnell und mit hoher Genauigkeit erzeugt werden. Durch eine entsprechende koordinierte Ansteuerung der Submodule 10 der drei Phasenmodule 7, 8, 9 können somit Störungen oder Unsymmetrien der dreiphasigen Netzspannung des Stromnetzes 1 ausgeglichen werden. Primär dient der Stromrichter 2 zur Blindleistungskompensation.

Wenn nach einer Störung der Leistungsschalter 6 geöffnet ist, wodurch der Stromrichter 2 vom Stromnetz 1 getrennt wird, würden sich die Kondensatoren 13 der einzelnen Submodule 10 der Phasenmodule 7, 8, 9 unsymmetrisch entladen, wodurch sich eine ungleichmäßige Energieverteilung einstellen würde. In diesem Zustand kann der Stromrichter 2 nicht eingeschaltet werden, stattdessen müsste man mehrere Minuten abwarten, bis die Kondensatoren 13 weitgehend entladen sind.

Die Phasenmodule 7, 8, 9 des Stromrichters 2 sind in Dreieckschaltung miteinander verbunden, daher fließt zwischen den Phasenmodulen 7, 8, 9 ein identischer Strom.

Der Stromrichter 2 weist eine Regelung 14 auf, durch die ein Energieausgleich zwischen den Phasenmodulen 7, 8, 9 bewirkt wird, so dass der Stromrichter nach einem Abschaltvorgang ohne Verzögerung wieder mit dem Stromnetz verbunden werden kann.

Durch die Regelung 14 wird jedes Phasenmodul 7, 8, 9 so angesteuert, dass sich eine Spannung einstellt, die über die zugehörige Induktivität 11 des jeweiligen Phasenmoduls 7, 8, 9 einen Strom treibt. Bei geöffnetem Leistungsschalter 6 sind die Ströme zwischen den einzelnen Phasenmodulen 7, 8, 9 identisch, es handelt sich um einen Kreisstrom. Dieser Kreisstrom ist mit der Nullkomponente der Phasenmodulspannungen steuerbar. Durch gezieltes Überlagern weiterer nullsystemfreier Phasenmodulspannungen, die von der Regelung 14 vorgegeben werden, wird ein Energieausgleich zwischen den Phasenmodulen 7, 8, 9 und den Kondensatoren 13 der Submodule 10 bewirkt. Dadurch wird eine ungleichmäßige Verteilung der Spannungen der Kondensatoren 13 vermieden, so dass der Stromrichter 2 sofort wieder eingeschaltet werden kann, um die Blindleistung in dem Stromnetz 1 zu kompensieren.

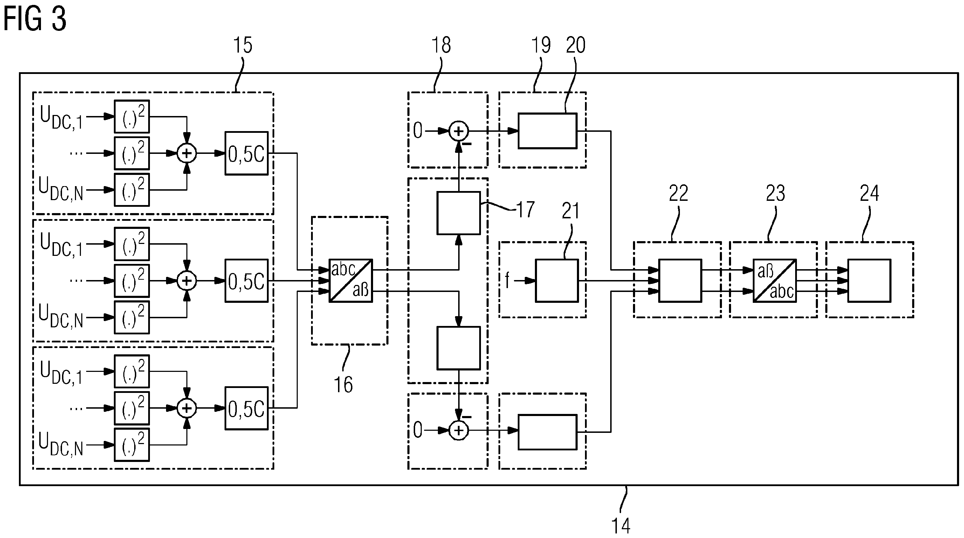

Die Balancierung der mittleren Kondensatorspannungen zwischen den Phasenmodulen 7, 8, 9 wird anhand von Fig. 3 erläutert.

Die Balancierung erfolgt durch die Regelung 14, wobei in einem ersten Schritt 15 die in den Energiespeichern der Phasenmodule 7, 8, 9 gespeicherte Energie berechnet wird. Die Berechnung der Phasenmodulenergien erfolgt durch Berechnen der skalierten Summe der einzelnen quadrierten Kondensatorspannungen der Kondensatoren 13 der Submodule 10. Die Ermittlung der Energien wird für jedes Phasenmodul 7, 8, 9 separat vorgenommen. Anschließend wird eine alpha-beta-Transformation 16 vorgenommen, wodurch das drei Größen umfassende System in ein zweiachsiges System überführt wird. Im nächsten Schritt 17 werden die berechneten Energien einer Filterung unterzogen. Anschließend wird im nächsten Schritt 18 der Regelfehler der einzelnen Energiekomponenten zu dem Sollwert 0 berechnet. Im Schritt 19 wird der Regelfehler einem Regler 20 zugeführt, der daraus eine Stellgröße ermittelt.

Ein Frequenzgenerator 21 erzeugt eine sinusförmige Wechselspannung mit einer Frequenz f. Diese Frequenz f ist unabhängig von der Frequenz der Netzspannung in dem Stromnetz 1. Durch eine Rotation 22 werden die durch die Regler 20 festgelegten Stellgrößen der von dem Frequenzgenerator 21 erzeugten Frequenz f aufgeprägt. Anschließend findet eine Rücktransformation 23 des alpha-beta-Systems in das dreiphasige Spannungssystem statt. Als Ergebnis werden dreiphasige Konverterspannungen erhalten. Durch eine Steuerungseinrichtung 24 werden die einzelnen Submodule 10 der Phasenmodule 7, 8, 9 eingestellt, wodurch sich die gewünschte symmetrische Energieverteilung ergibt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren für den Betrieb eines mehrstufigen Stromrichters (2) zur Blindleistungskompensation einer mehrphasigen Netzspannung, wobei jeder Phase (3,4,5) ein Phasenmodul (7,8,9) mit mehreren in Reihe geschalteten, jeweils einen elektrischen Energiespeicher aufweisenden, Submodulen (10) zugeordnet ist, wobei jedes Submodul (10) mittels eines elektronischen Schalters mit der Phase der Netzspannung verbunden oder davon getrennt werden kann, sowie mit einem Leistungsschalter (6) zum Trennen des Stromrichters (2) von der Netzspannung, **dadurch gekennzeichnet, dass** der Stromrichter eine Regelung (14) aufweist, durch die die Spannungen der Phasenmodule bei geöffnetem Leistungsschalter (6) balanciert werden, wobei die Balancierung der Spannungen der Phasenmodule (7,8,9) die folgenden Schritte umfasst:
- Berechnen der in den Energiespeichern der Phasenmodule (7,8,9) gespeicherten Energie;
- Berechnen eines Regelfehlers der einzelnen Energiespeicher;
- Zuführen zu einem Regler (20);
- Erzeugen einer sinusförmigen Wechselspannung in einem Funktionsgenerator;
- Zuordnen der Ausgangssignale des Reglers (20) zu der Wechselspannung; und
- Ansteuern der Submodule (10) zum Einstellen der Spannungen.

2. Verfahren nach Anspruch 1, **dadurch gekennzeichnet, dass** die Phasenmodule (7,8,9) in einer Dreieckschaltung geschaltet sind und bei geöffnetem Leistungsschalter (6) zum Energieausgleich gezielt durch die Regelung (14) mit Spannungen beaufschlagt werden.

3. Verfahren nach Anspruch 1 oder 2, **dadurch gekennzeichnet, dass** die in den Energiespeichern gespeicherte Energie einer alpha-beta-Transformation (16) unterzogen wird und nach dem Zuordnen der Ausgangssignale eine Rücktransformation (23) erfolgt, so dass jeder Phase eine Spannung zugeordnet wird.

4. Mehrstufiger Stromrichter (2) zur Blindleistungskompensation einer mehrphasigen Netzspannung, wobei jeder Phase (3, 4, 5) ein Phasenmodul (7, 8, 9) mit mehreren in Reihe geschalteten, jeweils einen elektrischen Energiespeicher aufweisenden, Submodulen (10) zugeordnet ist, wobei jedes Submodul (10) mittels eines elektronischen Schalters mit der Phase (3, 4, 5) der Netzspannung verbunden oder davon getrennt werden kann, sowie mit einem Leistungsschalter (6) zum Trennen des Stromrichters (2) von der Netzspannung, **dadurch gekennzeichnet, dass** der Stromrichter (2) eine Regelung (14) aufweist, die zum Balancieren der Spannungen der Phasenmodule (7, 8, 9) bei geöffnetem Leistungsschalter (6) ausgebildet ist, wobei die Regelung (14) zum Berechnen der in den Energiespeichern gespeicherten Energie, zum Berechnen eines Regelfehlers und Zuführen zu einem Regler (20), zum Erzeugen einer sinusförmigen Wechselspannung in einem Funktionsgenerator, zum Zuordnen der Ausgangssignale des Reglers (20) zu der Wechselspannung und zum Ansteuern der Submodule (10) zum Einstellen der Spannungen ausgebildet ist.

5. Stromrichter nach Anspruch 4, **dadurch gekennzeichnet, dass** der elektrische Energiespeicher eines Submoduls (10) als Kondensator (13) oder Batterie ausgebildet ist.

6. Stromrichter nach Anspruch 4 oder 5, **dadurch gekennzeichnet, dass** die Regelung (14) dazu ausgebildet ist, die in den Energiespeichern gespeicherte Energie einer alpha-beta-Transformation zu unterziehen, sowie einer Rücktransformation, um jeder Phase (3, 4, 5) eine Spannung zuzuordnen.

## Claims

1. Method for the operation of a multistage power converter (2) for the reactive power compensation of a multiphase grid voltage, wherein a phase module (7, 8, 9) including multiple submodules (10) connected in series, each including an electric energy store, is associated with each phase (3, 4, 5), wherein each submodule (10) may be connected to the phase of the grid voltage or may be disconnected from it with the aid of an electronic switch, and including a power switch (6) for disconnecting the power converter (2) from the grid voltage, **characterized in that** the power converter includes a controller (14) via which the voltages of the phase modules are balanced while the power switch (6) is open wherein the balancing of the voltages of the phase modules (7, 8, 9) comprises the following steps:
- calculating the energy stored in the energy stores of the phase modules (7, 8, 9);
- calculating a control error of the individual energy stores;
- routing to a controller (20);
- generating a sinusoidal AC voltage in a function generator;
- associating the output signals of the controller (20) with the AC voltage; and
- controlling the submodules (10) for adjusting the voltages.

2. Method according to Claim 1, **characterized in that** the phase modules (7, 8, 9) are connected in a delta configuration and are supplied with voltages while the power switch (6) is open for balancing energy in a targeted manner via the controller (14).

3. Method according to Claim 1 or 2, **characterized in that** the energy stored in the energy stores undergoes an alpha-beta transformation (16), and following the association of the output signals, a back-transformation (23) takes place, so that a voltage is associated with each phase.

4. Multistage power converter (2) for the reactive power compensation of a multiphase grid voltage, wherein a phase module (7, 8, 9) including multiple submodules (10) connected in series, each including an electric energy store, is associated with each phase (3, 4, 5), wherein each submodule (10) may be connected to the phase (3, 4, 5) of the grid voltage or may be disconnected from it with the aid of an electronic switch, and including a power switch (6) for disconnecting the power converter (2) from the grid voltage, **characterized in that** the power converter (2) includes a controller (14) which is designed for balancing the voltages of the phase modules (7, 8, 9) while the power switch (6) is open; wherein the controller (14) is designed for calculating the energy stored in the energy stores, for calculating a control error and routing to a controller (20), for generating a sinusoidal AC voltage in a function generator, for associating the output signals of the controller (20) with the AC voltage and for controlling the submodules (10) for adjusting the voltages.

5. Power converter according to Claim 4, **characterized in that** the electric energy store of a submodule (10) is designed as a capacitor (13) or a battery.

6. Power converter according to Claim 4 or 5, **characterized in that** the controller (14) is designed to subject the energy stored in the energy stores to an alpha-beta transformation, as well as a back transformation, in order to associate a voltage with each phase (3, 4, 5).

## Revendications

1. Procédé pour le fonctionnement d'un convertisseur (2) à plusieurs étages, afin de compenser la puissance réactive d'une tension de réseau polyphasée, dans lequel, à chaque phase (3, 4, 5), est affecté un module (7, 8, 9) de phase ayant plusieurs sous-modules montés en série et ayant chacun un accumulateur d'énergie électrique, dans lequel chaque sous-module (10) peut, au moyen d'un interrupteur électronique, être relié à la phase de la tension du secteur ou en être séparé, ainsi qu'ayant un disjoncteur (6) pour séparer le convertisseur (2) de la tension du réseau, **caractérisé en ce que** le convertisseur a une régulation (14), par laquelle les tensions des modules de phase sont équilibrées lorsque le disjoncteur (6) est ouvert, l'équilibrage des tensions des modules (7, 8, 9) de phase comprenant les stades suivants :
- calcul de l'énergie emmagasinée dans l'accumulateur d'énergie des modules (7, 8, 9) de phase ;
- calcul d'une erreur de régulation des divers accumulateurs d'énergie ;
- envoie à un régleur (20)
- production d'une tension alternative sinusoïdale dans un générateur de fonction ;
- affectation des signaux de sortie du régulateur (20) à la tension alternative ; et
- commande des sous-modules (10) pour régler les tensions.

2. Procédé suivant la revendication 1, **caractérisé en ce que** les modules (7, 8, 9) de phase sont montés suivant un circuit en triangle et, lorsque le disjoncteur (6) est ouvert, sont alimentés en des tensions par la régulation (14) de manière ciblée en vue de la compensation d'énergie.

3. Procédé suivant la revendication 1 ou 2, **caractérisé en ce que** l'énergie emmagasinée dans l'accumulateur d'énergie est soumise à une transformation (16) alpha-beta et, après l'affectation des signaux de sortie, il s'effectue une retransformation (23), de manière à affecter une tension à chaque phase.

4. Convertisseur (2) à plusieurs étages pour compenser la puissance réactive d'une tension de réseau polyphasée, dans lequel il est affecté à chaque phase (3, 4, 5) un module (7, 8, 9) de phase ayant plusieurs sous-modules (10) montés en série et ayant chacun un accumulateur d'énergie électrique, dans lequel chaque sous-module (10) peut, au moyen d'un interrupteur électronique, être relié à la phase (3, 4, 5) de la tension du réseau ou en être séparé, ainsi qu'ayant un disjoncteur (6) pour séparer le convertisseur (2) de la tension du réseau, **caractérisé en ce que** le convertisseur (2) a une régulation (14), qui est constituée pour équilibrer les tensions des modules (7, 8, 9) de phase lorsque le disjoncteur (6) est ouvert, la régulation (14) étant constituée pour calculer l'énergie emmagasinée dans les accumulateurs d'énergie, pour calculer une erreur de régulation et l'envoyer à un régleur (20), pour produire une tension alternative sinusoïdale dans un générateur de fonction, pour affecter des signaux de sortie du régulateur (20) à la tension alternative et pour commander les sous-modules (10), afin de régler les tensions.

5. Convertisseur suivant la revendication 4, **caractérisé en ce que** l'accumulateur d'énergie électrique d'un sous-module (10) est constitué sous la forme d'un condensateur (13) ou d'une batterie.

6. Convertisseur suivant la revendication 4 ou 5, **caractérisé en ce que** la régulation (14) est constituée pour soumettre l'énergie emmagasinée dans les accumulateurs d'énergie à une transformation alpha-beta, ainsi que pour une retransformation afin d'affecter une tension à chaque phase (3, 4, 5).
